# EUROPEAN PATENT APPLICATION

(11) **EP 4 576 756 A1**
(43) Date of publication of application: **25.06.2025**
(21) Application number: 23877036.6
(22) Date of filing: 31.08.2023
(51) Int. Cl.: H04N 1/00, B41J 29/38, G06F 3/12

(54) **PRINTING DEVICE, PRINTING SERVER, INFORMATION PROCESSING DEVICE, AND CONTROL METHODS FOR SAME**

(30) Priority: 11.10.2022 JP 2022163586; 21.08.2023 JP 2023134157
(71) Applicant: CANON KABUSHIKI KAISHA, Tokyo 146-8501 (JP)
(72) Inventor: SAKO, Ritsuto, Tokyo 146-8501 (JP)
(74) Representative: WESER & Kollegen Patentanwälte PartmbB
(86) International application number: PCT/JP2023/031808
(87) International publication number: WO 2024/080028

(57) **Abstract**

A printing apparatus includes a remote printing unit for executing printing in accordance with a print job transmitted from a print server, a local printing means for executing printing in accordance with a print job transmitted from an information processing apparatus connected to a same network as the printing apparatus, and a transmission means for transmitting, to the print server, support information indicating that the printing apparatus supports a standard print function included as standard in an operating system of the information processing apparatus.

## Description

### TECHNICAL FIELD

The present invention relates to a printing apparatus, a print server, an information processing apparatus, and control methods thereof.

### BACKGROUND ART

A cloud print service using a cloud has been proposed (PTL 1). A print server defines a virtual printer corresponding to a physical printing apparatus, and provides the virtual printer to an information processing apparatus. The print server provides, to the information processing apparatus, the attribute information acquired from the printing apparatus as the attribute information of the virtual printer.

### CITATION LIST

### PATENT LITERATURE

PTL 1: Japanese Patent Laid-Open No. 2020-35233

### SUMMARY OF INVENTION

### TECHNICAL PROBLEM

Some printing apparatuses support a standard print function which is included as standard in the operating system of an information processing apparatus. Conventionally, the attribute information provided from a printing apparatus to a print server does not include information indicating that the printing apparatus supports the standard print function. Therefore, the information processing apparatus cannot determine whether the virtual printer provided by the print server supports the standard print function. As a result, the convenience of the information processing apparatus having the standard print function is impaired. Some aspects of the present invention provide a technique for improving the convenience of an information processing apparatus having a standard print function.

### SOLUTION TO PROBLEM

According to some embodiments, a printing apparatus comprising: remote printing means for executing printing in accordance with a print job transmitted from a print server; local printing means for executing printing in accordance with a print job transmitted from an information processing apparatus connected to a same network as the printing apparatus; and transmission means for transmitting, to the print server, support information indicating that the printing apparatus supports a standard print function included as standard in an operating system of the information processing apparatus, is provided.

### ADVANTAGEOUS EFFECTS OF INVENTION

According to some embodiments, the convenience of an information processing apparatus having a standard print function is improved.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

Fig. 1 is a schematic view for explaining an example of the configuration of a printing system according to the first embodiment;
Fig. 2 is a block diagram for explaining an example of the hardware arrangement of a computer according to the first embodiment;
Fig. 3 is a block diagram for explaining an example of the functional arrangement of a print server according to the first embodiment;
Fig. 4 is a block diagram for explaining an example of the functional arrangement of an information processing apparatus according to the first embodiment;
Fig. 5 is a block diagram for explaining an example of the hardware arrangement of a printing apparatus according to the first embodiment;
Fig. 6 is a block diagram for explaining an example of the functional arrangement of the printing apparatus according to the first embodiment;
Fig. 7 is a schematic view for explaining an example of the arrangement of an operation panel of the printing apparatus according to the first embodiment;
Fig. 8 is a schematic view for explaining an example of a network setting screen of the printing apparatus according to the first embodiment;
Fig. 9 is a sequence chart for explaining the overall process of cloud print according to the first embodiment;
Fig. 10 is a view for explaining an example of printer attributes according to the first embodiment;
Fig. 11 is a flowchart for explaining an example of a method of generating the printer attributes according to the first embodiment;
Fig. 12 is a sequence chart for explaining the overall process of local print according to the first embodiment;
Fig. 13 is a flowchart for explaining an example of a method of searching for a printer according to the first embodiment;
Fig. 14A is a view for explaining an example of a screen for showing a printer search result according to the first embodiment;
Fig. 14B is a view for explaining an example of a screen for showing a printer search result according to the first embodiment;
Fig. 15 is a schematic view for explaining an example of a network setting screen of a printing apparatus according to the second embodiment;
Fig. 16 is a view for explaining an example of printer attributes according to the fourth embodiment;
Fig. 17 is a flowchart for explaining an example of a method of searching for a printer according to the fourth embodiment;
Fig. 18 is a flowchart for explaining an example of a method of processing a print job according to the fifth embodiment; and
Fig. 19 is a view for explaining an example of function specifying information according to the fifth embodiment.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### <First Embodiment>

### [Example of Configuration of Printing System]

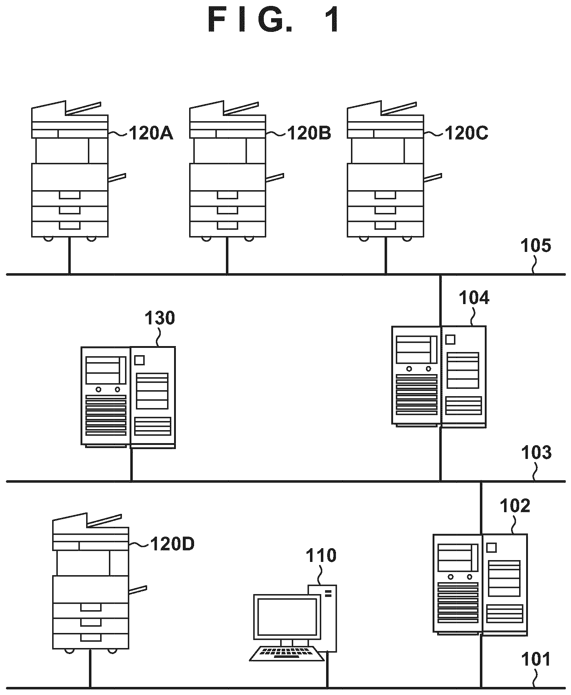

With reference to Fig. 1, an example of the configuration of a printing system according to the first embodiment will be described. The printing system includes, for example, an information processing apparatus 110, printing apparatuses 120A to 120D, and a print server 130. The numbers of components of the printing system are not limited to them in the example of Fig. 1. The printing system may include components not shown in Fig. 1.

The information processing apparatus 110 and the printing apparatus 120D are connected to the same local area network (LAN) 101. The LAN 101 may be a wired LAN, a wireless LAN, or a combination thereof. The LAN 101 is connected to a wide area network 103 (for example, the Internet) via a firewall 102. The print server 130 is also connected to the wide area network 103. The information processing apparatus 110 and the printing apparatus 120D can communicate with each other in the LAN 101 (that is, without intervening the wide area network 103). The information processing apparatus 110 and the printing apparatus 120D can communicate with the print server 130 via the LAN 101, the firewall 102, and the wide area network 103. Alternatively or additionally, the information processing apparatus 110 and the printing apparatus 120D may be connected to the wide area network 103 via a cellular network (for example, a network compliant with the 4th generation communication standard (4G) or the 5th generation communication standard (5G)).

The printing apparatuses 120A to 120C are connected to the same LAN 105. The LAN 105 may be a wired LAN, a wireless LAN, or a combination thereof. The LAN 105 is connected to the wide area network 103 via a firewall 104. The LAN 105 is a LAN different from the LAN 101. The printing apparatuses 120A to 120C can communicate with the print server 130 via the LAN 105, the firewall 104, and the wide area network 103. Alternatively or additionally, the printing apparatuses 120A to 120C may be connected to the wide area network 103 via a cellular network. The information processing apparatus 110 can communicate with the printing apparatuses 120A to 120C via the LANs 101 and 105, the firewalls 102 and 104, and the wide area network 103. In the example shown in Fig. 1, the printing apparatuses 120A to 120C are connected to the same LAN 105, but they may be connected to different LANs.

The printing apparatuses 120A to 120D have a print function of performing printing based on a print job. The printing apparatuses 120A to 120D may include at least one of a scanner function and a FAX function in addition to the print function. The printing apparatus having multiple functions in this manner may be called a multifunction printer (MFP). Instead, the printing apparatuses 120A to 120D may be Single Function Peripherals (SFPs) having only the print function. Printing may be printing on a sheet-like print medium such as paper, or may be molding of a three-dimensional object (so-called three-dimensional printing).

In accordance with a print job generated by the information processing apparatus 110, the print server 130 provides a print service for transmitting the print job to one of the printing apparatuses (for example, the printing apparatus 120A). For example, the print server 130 provides a logical printer to the information processing apparatus 110, and accepts a print job for the logical printer. The logical printer is a virtual printing apparatus (for example, a printer object) provided by the print server 130. The logical printer can also be called a cloud printer. The information processing apparatus 110 can generate a print queue for the logical printer in the same manner as for the printing apparatus 120D. In contrast to the logical printer, physical printing apparatuses such as the printing apparatuses 120A to 120D can also be called physical printers. In the following description, the logical printer and the physical printer are collectively referred to simply as printers. When the physical printer is connected to the same LAN as the information processing apparatus that submits a print job, it can also be called a local printer.

The print server 130 may be a server in an on-premise environment connected to the wide area network 103, or may be a server in a cloud computing environment (to be simply referred to as a cloud). A print service provided by the print server 130 in the cloud may be called a cloud print service (to be called CPS hereinafter). An example of the cloud print service is Universal Print (registered trademark) provided by Microsoft. In the following description, a case in which the print server 130 is in a cloud will be described. However, the following description also applies to a case in which the print server 130 is in an on-premise environment.

The information processing apparatus 110 provides a print function to the user of the information processing apparatus 110. The information processing apparatus may be a personal computer (PC), a smartphone, or another device. The information processing apparatus 110 may designate, as an output destination, a physical printer (for example, the printing apparatus 120D) connected to the same LAN 101, or may designate, as an output destination, a logical printer provided by the print server 130. If a logical printer is designated as an output destination, the physical printer (for example, the printing apparatus 120A) associated with the logical printer performs printing. The information processing apparatus 110 using CPS may be called a client or a client terminal. Printing performed by submitting a print job to a logical printer can also be called cloud print, remote print, or remote printing. Printing by cloud print may be executed by the printing apparatus 120D connected to the same LAN 101 as the information processing apparatus 110, or may be executed by the printing apparatus (for example, the printing apparatus 120A) not connected to the LAN 101. Printing performed by submitting a print job to a physical printer directly (that is, in a LAN) can also be called local print or local printing.

The information processing apparatus 110 may have a print function included as standard in the operating system (OS). Such the print function is called a standard print function. The standard print function can also be called an OS standard print function or a native print function. The information processing apparatus 110 having the standard print function does not require separate software (for example, a driver) to use a printing apparatus supporting the standard print function. Examples of the standard print function are AirPrint (registered trademark) included as standard in iOS, macOS, and the like, and Mopria (registered trademark) included as standard in Android and the like.

### [Example of Hardware Arrangement of Computer]

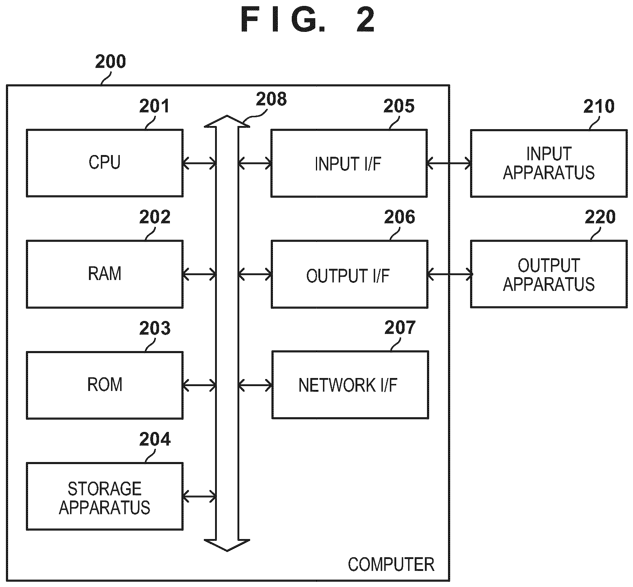

With reference to Fig. 2, an example of the hardware arrangement of a computer 200 according to this embodiment will be described. The computer 200 may be used as the information processing apparatus 110, or may be used as the print server 130. The computer 200 may include components shown in Fig. 2.

A central processing unit (CPU) 201 is a general-purpose processing circuit that controls the overall operation of the computer 200. A random access memory (RAM) 202 is a volatile memory, and used as a temporary storage area such as a work area for processing by the CPU 201. A read-only memory (ROM) 203 is a nonvolatile memory circuit, and stores programs and data used for processing of the CPU 201. A storage apparatus 204 is a nonvolatile storage apparatus, and stores programs and data used for processing of the CPU 201. The storage apparatus 204 may be, for example, a hard disk drive (HDD) or a solid-state drive (SSD). The storage apparatus 204 can also be called a secondary storage apparatus. An operation by the computer 200 may be implemented by the CPU 201 executing a program read out from the storage apparatus 204 to the RAM 202.

An input interface (I/F) 205 is an I/F for exchanging signals with an input apparatus 210. The input apparatus 210 is an apparatus that acquires an input from the user of the computer 200. The input apparatus 210 may be, for example, a keyboard, a touch panel, a microphone, a mouse, or an arbitrary combination thereof. An output I/F 206 is an I/F for exchanging signals with an output apparatus 220. The output apparatus 220 is an apparatus that provides information to the user of the computer 200. The output apparatus 220 may be, for example, a display, a speaker, or an arbitrary combination thereof. A network I/F 207 is an I/F for communication with an apparatus outside the computer 200. Each of the CPU 201, the RAM 202, the ROM 203, the storage apparatus 204, the input I/F 205, the output I/F 206, and the network I/F 207 is connected to a system bus 208. In the example shown in Fig. 2, the input apparatus 210 and the output apparatus 220 are shown as apparatuses separated from the computer 200. Instead, the computer 200 may include the input apparatus 210 and the output apparatus 220.

### [Example of Functional Arrangement of Print Server]

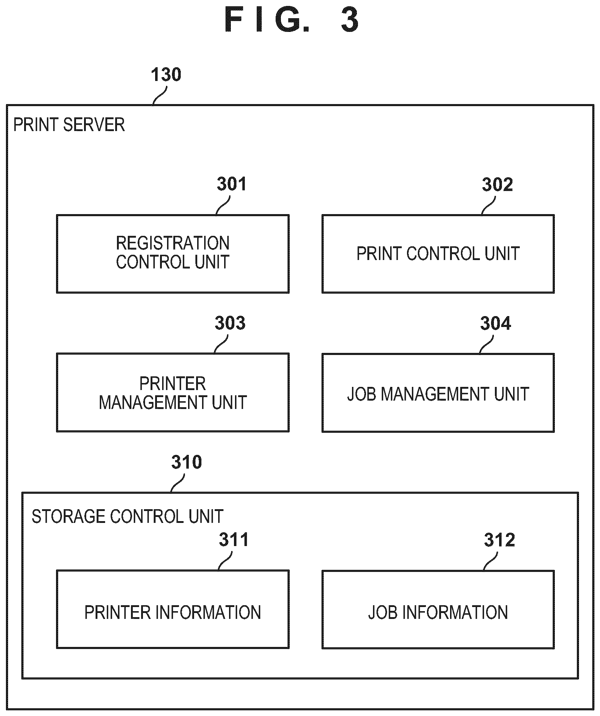

With reference to Fig. 3, an example of the functional arrangement of the print server 130 will be described. The print server 130 may have functional units shown in Fig. 3. The print server 130 may have a functional unit not shown in Fig. 3. Each functional unit shown in Fig. 3 may be implemented by the CPU 201 executing a program read out to the RAM 202. Instead, some or all of the functional units shown in Fig. 3 may be implemented by a dedicated processing circuit such as an application specific integrated circuit (ASIC).

A registration control unit 301 performs processing for registering a logical printer. For example, in response to a registration start request from a printing apparatus, the registration control unit 301 generates a logical printer associated with the physical printer and registers it in printer information 311. The logical printer registered in the printer information 311 is recognized as a printer by the information processing apparatus 110. A physical printer associated with a logical printer may be the physical printer that performs printing in accordance with a print job submitted to the logical printer. The logical printer may be associated with one physical printer alone. The physical printer may be associated with one logical printer alone, or may be associated with a plurality of logical printers.

A print control unit 302 performs processing regarding a print job to a logical printer. For example, the print control unit 302 receives, from the information processing apparatus 110, a print job to a logical printer and, based on this, transmits the print job to a physical printer associated with the logical printer. The print control unit 302 may also control an event regarding a print job. An event regarding a print job may include, for example, reception of the print job. In response to reception of an event request from a physical printer, the print control unit 302 may respond with the event associated with the physical printer.

A printer management unit 303 manages, as the printer information 311, information regarding a logical printer registered with the print server 130. The printer information 311 includes the capability information of the physical printer associated with the logical printer, a cloud printer ID uniquely assigned to the logical printer, information of a print queue where the print job is spooled, and the like.

A job management unit 304 manages, as job information 312, information regarding a print job received from the information processing apparatus 110. The job information 312 includes the information and state of the print job, print data designated by the print job, and the like.

A storage control unit 310 stores information in the RAM 202 or the storage apparatus 204 in accordance with an instruction from the other functional unit, and reads out information from the RAM 202 or the storage apparatus 204. According to this embodiment, the storage control unit 310 stores the printer information 311 and the job information 312.

### [Example of Functional Arrangement of Information Processing Apparatus]

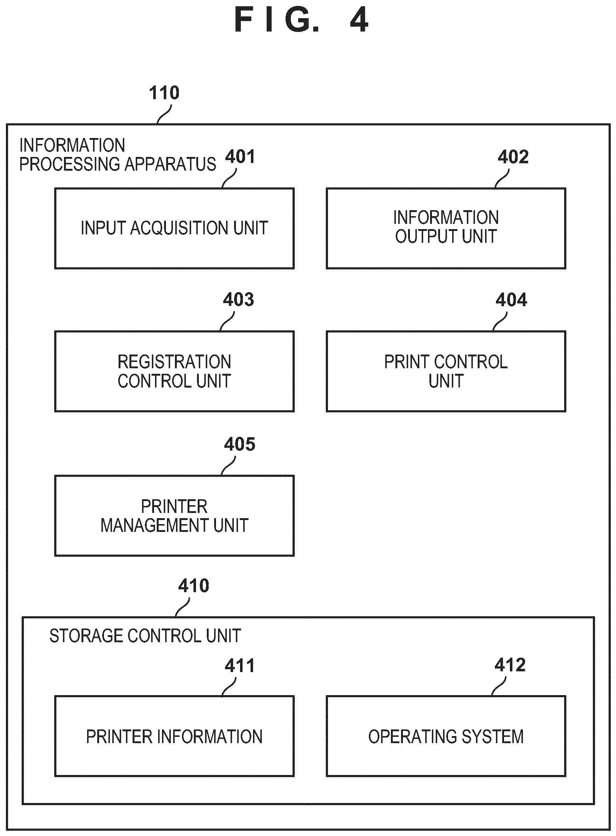

With reference to Fig. 4, an example of the functional arrangement of the information processing apparatus 110 will be described. The information processing apparatus 110 may have functional units shown in Fig. 4. The information processing apparatus 110 may have a functional unit not shown in Fig. 4. Each functional unit shown in Fig. 4 may be implemented by the CPU 201 executing a program read out to the RAM 202. Instead, some or all of the functional units shown in Fig. 4 may be implemented by a dedicated processing circuit such as an ASIC.

An input acquisition unit 401 acquires an input from the user of the information processing apparatus 110 by using the input I/F 205. An information output unit 402 outputs information to the user of the information processing apparatus 110 by using the output I/F 206.

A registration control unit 403 performs processing for registering a logical printer with the print server 130. A print control unit 404 performs processing regarding printing by a printer. For example, in accordance with a print instruction from the user of the information processing apparatus 110, the print control unit 404 may transmit a print job to the logical printer registered with the print server 130. In accordance with a print instruction from the user of the information processing apparatus 110, the print control unit 404 may transmit a print job directly (that is, in the same LAN) to the physical printer.

A printer management unit 405 manages, as printer information 411, information regarding the printer to which the information processing apparatus 110 can submit a print job. The printer information 411 includes the capability information of the printer and the like. The printer management unit 405 may search for the printer to which the information processing apparatus 110 can submit a print job.

A storage control unit 410 stores information in the RAM 202 or the storage apparatus 204 in accordance with an instruction from the other functional unit, and reads out information from the RAM 202 or the storage apparatus 204. According to this embodiment, the storage control unit 410 stores the printer information 411 and an operating system 412. The operating system 412 is installed on the information processing apparatus 110 as standard (that is, at the time of shipment of the information processing apparatus 110). The operating system 412 may be updated. The operating system 412 has functions for basic management and control of the information processing apparatus 110. As described above, the operating system 412 may include the standard print function.

### [Example of Hardware Arrangement of Printing Apparatus]

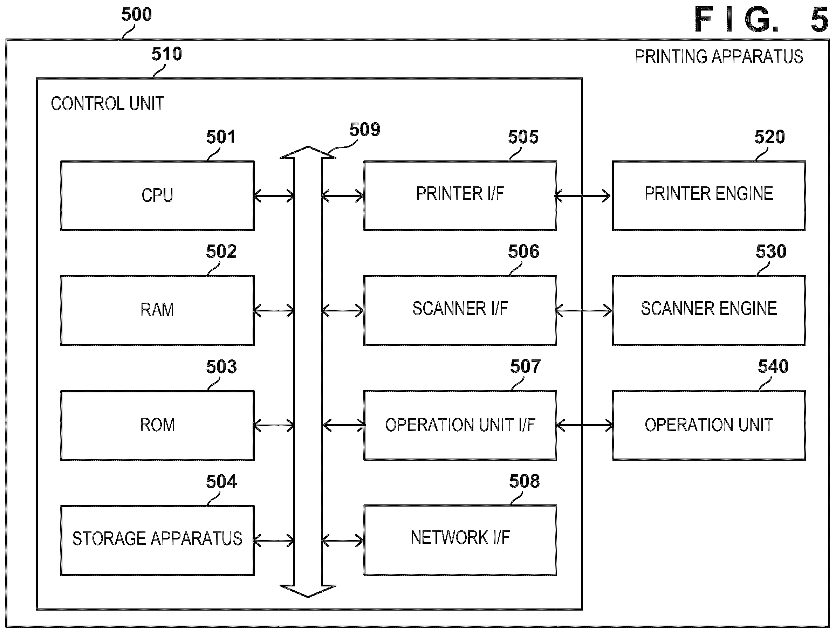

With reference to Fig. 5, an example of the hardware arrangement of a printing apparatus 500 according to this embodiment will be described. The printing apparatus 500 may be used as any of the printing apparatuses 120A to 120D. The printing apparatus 500 may include components shown in Fig. 5. Since the printing apparatus 500 is a physical printing apparatus, it can also be called a physical printer.

A CPU 501 is a general-purpose processing circuit that controls the overall operation of the printing apparatus 500. A RAM 502 is a volatile memory circuit, and used as a temporary storage area such as a work area for processing by the CPU 501. A ROM 503 is a nonvolatile memory circuit, and stores programs and data used for processing of the CPU 501. A storage apparatus 504 is a nonvolatile storage apparatus, and stores programs and data (for example, a print job, image data, and setting information) used for processing of the CPU 501. The storage apparatus 504 may be, for example, an HDD or an SSD. The storage apparatus 504 can also be called a secondary storage apparatus. An operation by the printing apparatus 500 may be implemented by the CPU 501 executing a program read out from the storage apparatus 504 to the RAM 502.

A printer I/F 505 is an I/F for exchanging signals with a printer engine 520. The printer engine 520 performs printing based on signals (for example, an image signal and a print command) supplied from a control unit 510 via the printer I/F 505. Printing may be electrophotographic printing in which toner is transferred onto paper and fixed thereto, inkjet printing in which ink is discharged onto paper, or three-dimensional printing.

A scanner I/F 506 is an I/F for exchanging signals with a scanner engine 530. The scanner engine 530 supplies a signal (for example, an image signal) obtained by reading a document to the control unit 510 via the scanner I/F 506. The CPU 501 may process the image signal supplied from the scanner engine 530 and supply the obtained print image signal to the printer engine 520. The CPU 501 may generate image data based on the image signal supplied from the scanner engine 530 and transmit it to an external apparatus.

An operation unit I/F 507 is an I/F for exchanging signals with an operation unit 540. The operation unit 540 is an apparatus that acquires an input from the user of the printing apparatus 500, and provides information to the user of the printing apparatus 500. The operation unit 540 may be constituted by, for example, a display panel (for example, a liquid crystal display), a speaker, a touch panel, a keyboard, buttons, a touch screen, or an arbitrary combination thereof.

A network I/F 508 is an I/F for communication with an external apparatus of the printing apparatus 500. The control unit 510 is constituted by the CPU 501, the RAM 502, the ROM 503, the storage apparatus 504, the printer I/F 505, the scanner I/F 506, the operation unit I/F 507, and the network I/F 508. The respective components included in the control unit 510 are connected to a system bus 509.

### [Example of Functional Arrangement of Printing Apparatus]

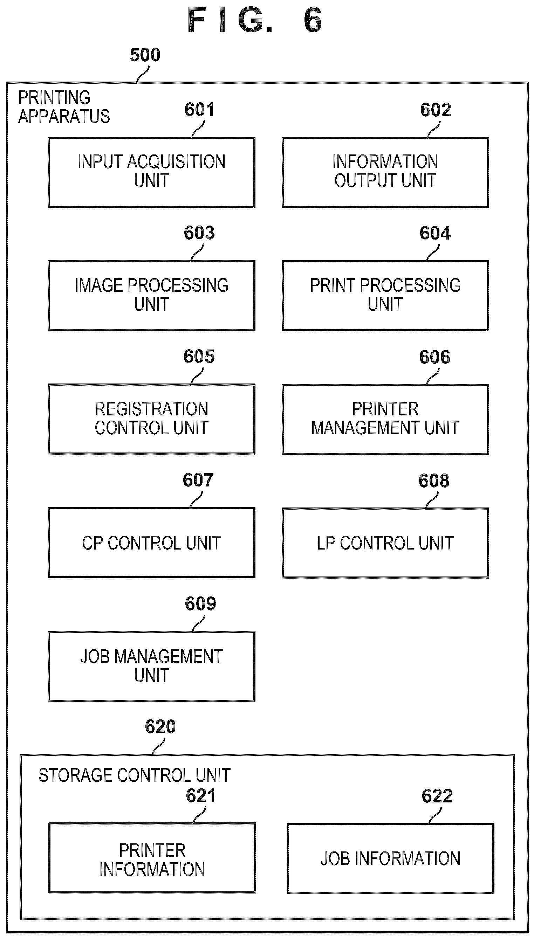

With reference to Fig. 6, an example of the functional arrangement of the printing apparatus 500 will be described. The printing apparatus 500 may have functional units shown in Fig. 6. The printing apparatus 500 may have a functional unit not shown in Fig. 6. Each functional unit shown in Fig. 6 may be implemented by the CPU 501 executing a program read out to the RAM 502. Instead, some or all of the functional units shown in Fig. 6 may be implemented by a dedicated processing circuit such as an ASIC.

An input acquisition unit 601 acquires an input from the user of the printing apparatus 500 by using the operation unit I/F 507. An information output unit 602 outputs information to the user of the printing apparatus 500 by using the operation unit I/F 507. For example, the information output unit 602 displays an operation menu on the operation unit 540. The input acquisition unit 601 acquires an input for the operation menu, and notifies the other functional unit of the input instruction contents. The information output unit 602 displays, on the operation unit 540, a result acquired from the other functional unit.

An image processing unit 603 renders a print job into image data for printing. A print processing unit 604 prints the image data rendered by the image processing unit 603.

A registration control unit 605 performs processing for registering, with the print server 130, a logical printer associated with the printing apparatus 500. A printer management unit 606 manages, as printer information 621, information regarding the printing apparatus 500. The printer information 621 may include, for example, the state of the printing apparatus 500, the capabilities of the printing apparatus 500, and a cloud printer ID uniquely assigned by the print server 130 to the logical printer associated with the printing apparatus 500. The printer information 621 may also include a local printer ID that allows the information processing apparatus 110 to identify a printing apparatus in the same LAN 101.

A cloud print (CP) control unit 607 performs processing regarding cloud print. For example, the CP control unit 607 may transfer, to the image processing unit 603, the print data included in a print job received from the print server 130, thereby executing printing in accordance with the print job transmitted to the print server 130. Further, the CP control unit 607 may transmit an event request to the print server 130.

A local print (LP) control unit 608 performs printing regarding local print. For example, the LP control unit 608 may respond to a printer search from the information processing apparatus 110. Further, the LP control unit 608 may transfer, to the image processing unit 603, the print data included in a print job received directly from the information processing apparatus 110, thereby executing printing in accordance with the print job transmitted from the information processing apparatus 110. A job management unit 609 manages, as job information 622, information regarding a print job. The job information 622 may include the processing state and processing result of a print job.

A storage control unit 620 stores information in the RAM 502 or the storage apparatus 504 in accordance with an instruction from the other functional unit, and reads out information from the RAM 502 or the storage apparatus 504. According to this embodiment, the storage control unit 620 stores the printer information 621 and the job information 622. The storage control unit 620 may manage data as a file system. The storage control unit 620 may distribute the storage destination of each piece of data between the storage apparatus 504 as a nonvolatile area and the RAM 502 as a volatile area. For example, the storage control unit 620 may store the printer information 621 and the job information 622 in the nonvolatile area.

### [Example of Arrangement of Operation Unit of Printing Apparatus]

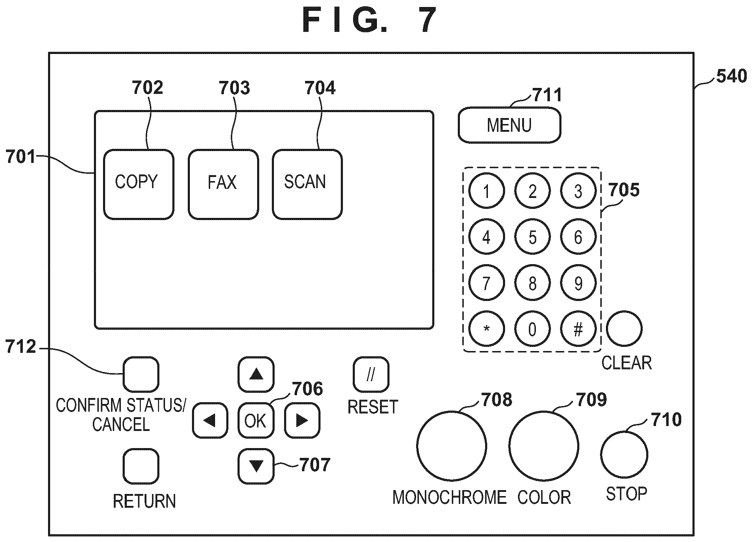

With reference to Fig. 7, an example of the arrangement of the operation unit 540 of the printing apparatus 500 will be described. In the example shown in Fig. 7, the operation unit 540 is configured as an operation panel formed in a panel shape. The operation unit 540 may include components shown in Fig. 7. The operation unit 540 may include a component not shown in Fig. 7.

A display panel 701 is a touch screen where a touch panel for acquiring an input from the user and a display (for example, a liquid crystal display) for displaying information to the user are integrally formed. In the example shown in Fig. 7, the display panel 701 displays buttons 702 to 704. The button 702 is a software button for acquiring a transition instruction to a copy mode from the user. In response to the user touching the button 702, the printing apparatus 500 displays a copy operation screen on the display panel 701. The button 703 is a software button for acquiring a transition instruction to a FAX mode from the user. In response to the user touching the button 703, the printing apparatus 500 displays a FAX operation screen on the display panel 701. The button 704 is a software button for acquiring a transition instruction to a scanner mode from the user. In response to the user touching the button 704, the printing apparatus 500 displays a scanner operation screen on the display panel 701. In addition, a dialog box for user interaction and a cloud print job list may be displayed on the display panel 701.

A ten-key pad 705 is a set of physical buttons for acquiring an input such as a number from the user. A button 706 is a physical button for acquiring, from the user, an instruction to decide the displayed contents of the display panel 701, and the like. Direction keys 707 are physical buttons for acquiring, from the user, an instruction to select an item from the menu displayed on the display panel 701. A button 708 is a physical button for acquiring a monochrome copy instruction from the user. A button 709 is a physical button for acquiring a color copy instruction from the user. A button 710 is a physical button for acquiring a processing stop instruction from the user. A button 711 is a physical button for acquiring, from the user, an instruction to display the menu screen for performing setting of the printing apparatus 500 or the like. A button 712 is a physical button for acquiring, from the user, an instruction to display the status of the printing apparatus 500 such as a list of print jobs received by the printing apparatus 500.

### [Example of Arrangement of Network Setting Screen]

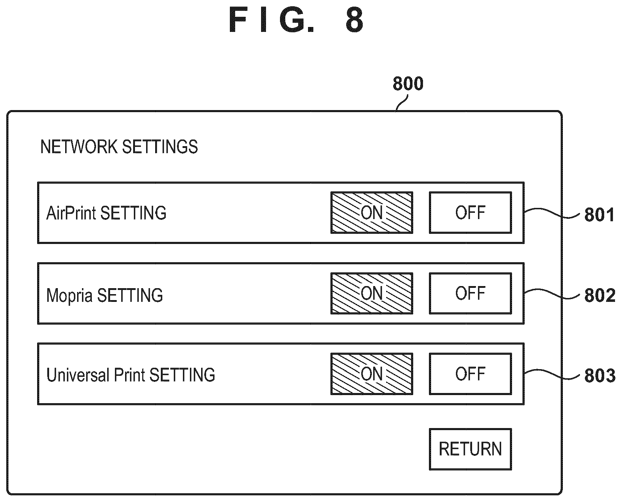

With reference to Fig. 8, an example of the arrangement of a network setting screen 800 displayed on the operation unit 540 of the printing apparatus 500 will be described. The network setting screen 800 is displayed on, for example, the display panel 701 of the operation unit 540. The network setting screen 800 is a user interface that allows the user to set whether to enable or disable a specific print function. In the description of Fig. 8, it is assumed that the printing apparatus 500 supports AirPrint, Mopria, and CPS. When the printing apparatus 500 supports a specific print function, this may mean that the printing apparatus 500 can operate in accordance with an instruction made by an external apparatus (for example, the information processing apparatus 110 or the print server 130) by using the specific print function.

A setting area 801 is an area for AirPrint setting. If an ON button in the setting area 801 is selected, the printer management unit 606 enables AirPrint. If an OFF button in the setting area 801 is selected, the printer management unit 606 disables AirPrint. The ON button and the OFF button in the setting area 801 can be alternately selected. The printer management unit 606 of the printing apparatus 500 stores the setting as to whether AirPrint is enabled or disabled in the storage apparatus 504 as the printer information 621.

If AirPrint is enabled, the printing apparatus 500 operates as a printing apparatus supporting AirPrint. For example, the printing apparatus 500 operates in accordance with an instruction made by an external apparatus (for example, the information processing apparatus 110 or the print server 130) by using AirPrint. The printing apparatus 500 transmits, to the external apparatus (for example, the information processing apparatus 110 or the print server 130), information indicating that the printing apparatus 500 supports AirPrint.

If AirPrint is disabled, the printing apparatus 500 does not operate as a printing apparatus supporting AirPrint. For example, the printing apparatus 500 does not operate in accordance with an instruction made by an external apparatus (for example, the information processing apparatus 110 or the print server 130) by using AirPrint. The printing apparatus 500 does not transmit, to the external apparatus (for example, the information processing apparatus 110 or the print server 130), information indicating that the printing apparatus 500 supports AirPrint.

A setting area 802 is an area for Mopria setting. Since Mopria setting may be similar to AirPrint setting, a repetitive description will be omitted. A setting area 803 is an area for Universal Print setting. Since Universal Print setting may be similar to AirPrint setting, a repetitive description will be omitted.

In the example shown in Fig. 8, the printing apparatus 500 can individually set whether to enable or disable each of two types of standard print functions (that is, AirPrint and Mopria). The printing apparatus 500 may support two types of standard print functions, and may be capable of individually setting whether to enable or disable each of two or more types of standard print functions. As a result, for each of two types of standard print functions, the printing apparatus 500 transmits, to the print server 130, information indicating that the printing apparatus 500 supports the individual standard print function. The printing apparatus 500 may be capable of uniformly setting whether to enable or disable two or more types of standard print functions.

In the example shown in Fig. 8, the printing apparatus 500 can set whether to enable or disable the standard print function. Instead, the printing apparatus 500 may not be capable of setting whether to enable or disable the standard print function. In this case, the printing apparatus 500 may always enable the standard print function.

### [Overall Processing Sequence of Cloud Print]

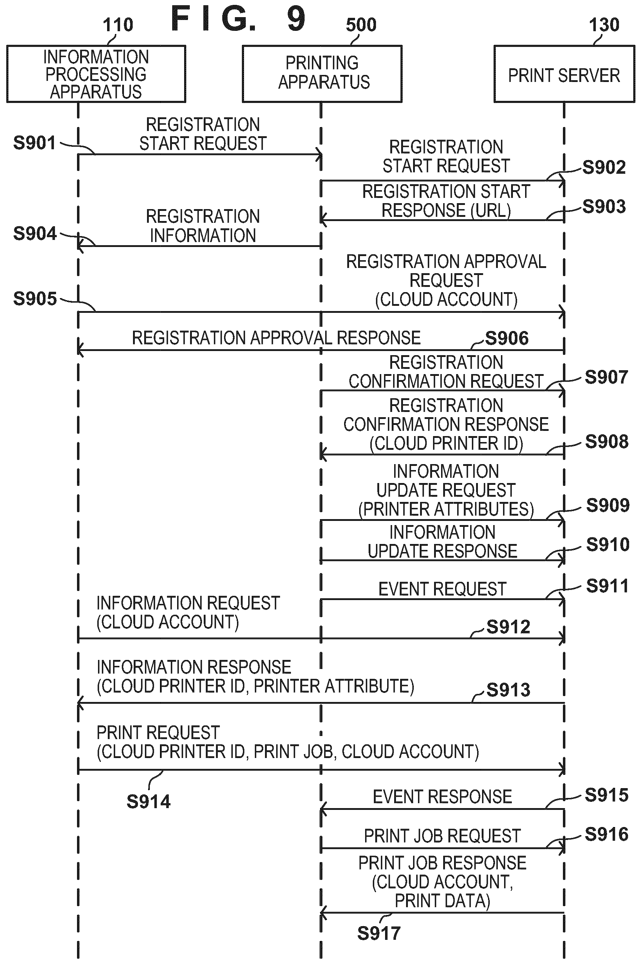

With reference to Fig. 9, the overall processing sequence for performing cloud print will be described. In the example shown in Fig. 9, the information processing apparatus 110 registers the printing apparatus 500 with the print server 130, and submits a print job to the logical printer associated with the printing apparatus 500. The following description for the printing apparatus 500 may be applied to the printing apparatuses 120A to 120D in a similar manner. Registering the printing apparatus 500 with the print server 130 may mean registering the logical printer associated with the printing apparatus 500 with the print server 130. In the following example, the printing apparatus 500 supports a web user interface (UI) function for operating the printing apparatus 500 from the information processing apparatus 110. The information processing apparatus 110 also supports the web UI client function. Intercommunication among the information processing apparatus 110, the printing apparatus 500, and the print server 130 may be performed using Internet Printing Protocol (IPP).

In S901, in accordance with an instruction from the user of the information processing apparatus 110, the registration control unit 403 of the information processing apparatus 110 transmits a registration start request to the printing apparatus 500. The registration start request may be a request for starting processing for registering the printing apparatus 500 with the print server 130. The registration start request may be transmitted using the web UI client function of the information processing apparatus 110.

In S902, in response to reception of the registration start request from the information processing apparatus 110, the registration control unit 605 of the printing apparatus 500 transmits a registration start request to the print server 130. The registration start request may be a request for starting processing for registering the printing apparatus 500 with the print server 130.

In S903, in response to reception of the registration start request from the printing apparatus 500, the registration control unit 301 of the print server 130 transmits a registration start response to the printing apparatus 500. The registration start response includes the URL (Uniform Resource Locator) of a web page for the user of the information processing apparatus 110 to input information for registering the printing apparatus 500 with the print server 130.

In S904, in response to reception of the registration start response from the print server 130, the registration control unit 605 of the printing apparatus 500 transmits registration information to the information processing apparatus 110. The registration information includes the URL included in the registration start response. In response to reception of the registration information from the printing apparatus 500, the information output unit 402 of the information processing apparatus 110 displays the web page to the user.

In S905, in response to the user of the information processing apparatus 110 accessing the URL and inputting information required for registration, the registration control unit 403 of the information processing apparatus 110 transmits a registration approval request to the print server 130. The registration approval request includes the cloud account of the user of the information processing apparatus 110. The cloud account is an account that allows the user to use cloud tenants including the print server 130.

In S906, the registration control unit 301 of the print server 130 checks whether the cloud account included in the registration approval request belongs to a user having the authority to register the printing apparatus 500 with the print server 130. If the user has the authority, the registration control unit 301 of the print server 130 transmits a registration approval response to the information processing apparatus 110. The registration approval response may be a message notifying the result of confirmation that the user of the information processing apparatus 110 is a user having the authority to register the printing apparatus 500.

In S907, in response to reception of the registration start response from the print server 130, the printer management unit 606 of the printing apparatus 500 transmits a registration confirmation request to the print server 130. The registration confirmation request is a request regarding registration of the printing apparatus 500 with the print server 130, and more specifically, may be a request for registering the printing apparatus 500 with the print server 130.

In S908, in response to reception of the registration confirmation request from the printing apparatus 500, the printer management unit 303 of the print server 130 generates a new logical printer, and adds the logical printer associated with the printing apparatus 500 to the printer information 311. Thus, the printing apparatus 500 is registered with the print server 130, and the information processing apparatus 110 can perform cloud print using the logical printer. In addition, the printer management unit 303 of the print server 130 assigns a unique cloud printer ID to the generated logical printer, and adds the cloud printer ID associated with the logical printer to the printer information 311. Thereafter, the registration control unit 301 of the print server 130 transmits a registration confirmation response to the printing apparatus 500. The registration confirmation response includes the cloud printer ID of the printing apparatus 500.

In S909, in response to completion of registration of the printing apparatus 500 with the print server 130, the printer management unit 606 of the printing apparatus 500 transmits an information update request to the print server 130. The information update request may be a request for updating the information regarding the printing apparatus 500. The information update request includes the printer attributes of the printing apparatus 500. The information update request may be transmitted in an update-output-device-attributes request message defined in IPP.

In S910, based on the printer attributes included in the received information update request, the printer management unit 303 of the print server 130 updates the information of the printing apparatus 500 included in the printer information 311, and transmits an information update response to the printing apparatus 500. The information update response may be a message notifying that update of the information of the printing apparatus 500 is completed successfully.

In S911, in response to reception of the registration confirmation response from the print server 130, the CP control unit 607 of the printing apparatus 500 transmits an event request to the print server 130. The event request may be a request for notifying the printing apparatus 500 if an event regarding the printing apparatus 500 occurs. The event request may be related to an event that a print job is submitted to the logical printer associated with the printing apparatus 500.

In S912, in accordance with an instruction from the user of the information processing apparatus 110, the printer management unit 405 of the information processing apparatus 110 transmits an information request to the print server 130. The information request may be a request for information regarding the logical printer usable by the user of the information processing apparatus 110. The information request includes the cloud account of the user of the information processing apparatus 110. The information request may be transmitted in a Get-Printer-Attributes Request message defined in IPP.

In S913, in response to reception of the information request from the information processing apparatus 110, the printer management unit 303 of the print server 130 transmits an information response to the information processing apparatus 110. The information response includes the cloud printer ID and the printer attributes for each of one or more logical printers usable by the user of the information processing apparatus 110. Based on the information response, the printer management unit 405 of the information processing apparatus 110 updates the printer information 411. The information response may be transmitted in a Get-Printer-Attributes Response message defined in IPP.

In S914, in accordance with an instruction from the user of the information processing apparatus 110, the printer management unit 405 of the information processing apparatus 110 transmits a print request to the print server 130. The print request includes the cloud printer ID, a print job, and the cloud account of the user of the information processing apparatus 110. The print job may include print data and print setting. The print request may be a request for printing the print data included in the print request to the logical printer having the cloud printer ID included in the print request.

In S915, in response to reception of the print request from the information processing apparatus 110, the print control unit 302 of the print server 130 transmits an event response to the printing apparatus 500 associated with the logical printer. The event response is a response to the event request received in S911. The event response is a response for notifying that an event of the type designated in the event request has occurred.

In S916, in response to reception of the event response from the print server 130, the CP control unit 607 of the printing apparatus 500 transmits a print job request to the print server 130. The print job request may be a request for a print job to be executed by the printing apparatus 500.

In S917, in response to reception of the print job request from the printing apparatus 500, the print control unit 302 of the print server 130 transmits a print job response to the printing apparatus 500. The print job response includes the cloud account and the print job. Thereafter, in response to reception of the print job response from the print server 130, the printing apparatus 500 performs printing based on the print job. The print job response received from the print server 130 by the printing apparatus 500 may be Fetch-Job Response of IPP.

In the description of Fig. 9, registration of the printing apparatus 500 in S901 to S906 and cloud print in S912 to S917 may be performed by the same user or different users.

### [Printer Attributes]

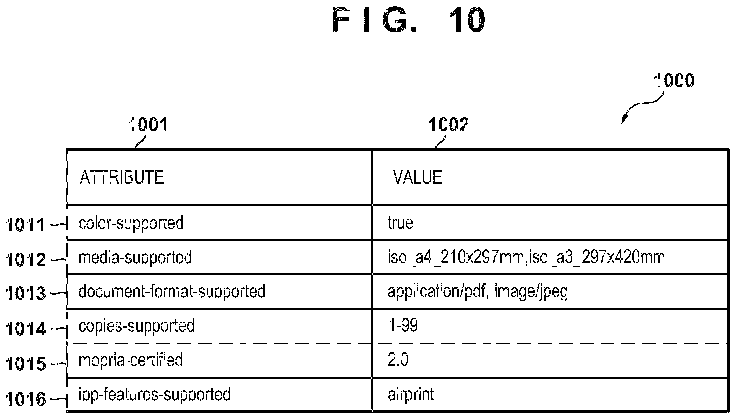

With reference to Fig. 10, an example of the printer attributes transmitted by the printing apparatus 500 in S909 and S913 of Fig. 9 will be described. In the example shown in Fig. 10, printer attributes 1000 are represented in a table format. Instead, the printer attributes 1000 may be represented in another format. The printer attributes 1000 includes columns 1001 and 1002. The column 1001 indicates the attribute name. The column 1002 indicates the attribute value.

A record 1011 indicates whether the printing apparatus 500 supports color printing. The attribute name is "color-supported". The attribute value is "true" if the printing apparatus 500 supports color printing, and is "false" if the printing apparatus 500 does not support color printing. The printer attributes 1000 indicates that the printing apparatus 500 supports color printing.

A record 1012 indicates the paper size supported by the printing apparatus 500. The attribute name is "media-supported". The attribute value is a character string assigned to the individual paper size. The printer attributes 1000 indicates that the printing apparatus 500 supports A4 paper represented by iso_a4_210×297mm, and A3 paper represented by iso_a3_297×420mm.

A record 1013 indicates the document format supported by the printing apparatus 500. The attribute name is "document-format-supported". The attribute value is a character string assigned to the individual document format. The printer attributes 1000 indicates that the printing apparatus 500 supports a PDF document format represented by application/pdf, and a JPEG document format represented by image/jpeg.

A record 1014 indicates the number of copies supported by the printing apparatus 500. The attribute name is "copies-supported". The attribute value is expressed by a numeric range. The printer attributes 1000 indicates that the printing apparatus 500 supports the number of copies from 1 to 99.

A record 1015 indicates the version of Mopria supported by the printing apparatus 500. The attribute name is "mopria-certified". The attribute value is a numeric value indicating the version. The printer attributes 1000 indicates that the printing apparatus 500 supports Mopria version 2.0. If the printer attributes 1000 includes the record having the name of "mopria-certified", this indicates that the printing apparatus 500 supports Mopria. To the contrary, if the printer attributes 1000 does not include the record having the name of "mopria-certified", this indicates that the printing apparatus 500 does not support Mopria.

A record 1016 indicates the function supported by the printing apparatus 500. The attribute name is "ipp-features-supported". The attribute value is "airprint" if the printing apparatus 500 supports AirPrint. If the printer attributes 1000 includes the record having the name of "ipp-features-supported" and the value of "airprint", this indicates that the printing apparatus 500 supports AirPrint. To the contrary, if the printer attributes 1000 does not include the record having the name of "ipp-features-supported" and the value of "airprint", this indicates that the printing apparatus 500 does not support AirPrint.

### [Timing of Transmitting Printer Attributes to Print Server]

In the example shown in Fig. 9, the printing apparatus 500 transmits the printer attributes to the print server 130 in S909 in response to completion of registration of the printing apparatus 500 with the print server 130. As described above with respect to Fig. 10, the printer attributes includes the information indicating that the printing apparatus 500 supports the standard print function. This information will be referred to as standard print support information hereinafter. In addition to or instead of completion of registration of the printing apparatus 500 with the print server 130, the printing apparatus 500 may transmit the printer attributes to the print server 130 if other conditions described below are satisfied.

For example, the printing apparatus 500 may transmit the printer attributes to the print server 130 if the printing apparatus 500 is activated in a state in which the printing apparatus 500 is registered with the print server 130.

The printing apparatus 500 may transmit the printer attributes to the print server 130 if the CP print function (that is, the function of performing printing in accordance with a print job transmitted from the print server 130) is changed from a disabled state to an enabled state. The CP print function is changed from the disabled state to the enabled state if, for example, the user selects the ON button in the setting area 803 of the network setting screen 800.

The printing apparatus 500 may transmit the printer attributes to the print server 130 if it is set to transmit the standard print support information to the print server 130. Such setting is performed if, for example, the user selects the ON button in the setting area 801 or 802 of the network setting screen 800. As described above, if the user selects the ON button in the setting area 801, AirPrint is enabled. In this case, information indicating that the printing apparatus 500 supports AirPrint (for example, the record 1016 shown in Fig. 10) is transmitted to the print server 130. Similarly, if the user selects the ON button in the setting area 802, Mopria is enabled. In this case, information indicating that the printing apparatus 500 supports Mopria (for example, the record 1015 shown in Fig. 10) is transmitted to the print server 130.

The printing apparatus 500 may transmit the printer attributes to the print server 130 if the configuration information of the printing apparatus 500 has changed. For example, a change of the configuration information of the printing apparatus 500 may include a change of the paper size set in the printing apparatus 500 from A3 to A4.

The printing apparatus 500 may transmit the printer attributes to the print server 130 if the state of the printing apparatus 500 has changed. For example, a change of the state of the printing apparatus 500 may include an occurrence of an error (for example, a paper run-out error) in the printing apparatus 500.

The printing apparatus 500 may transmit the printer attributes to the print server 130 at all of the above-described timings, or may transmit the printer attributes to the print server 130 at only some of all of the above-described timings.

### [Operation Procedure of Transmitting Printer Attributes by Printing Apparatus]

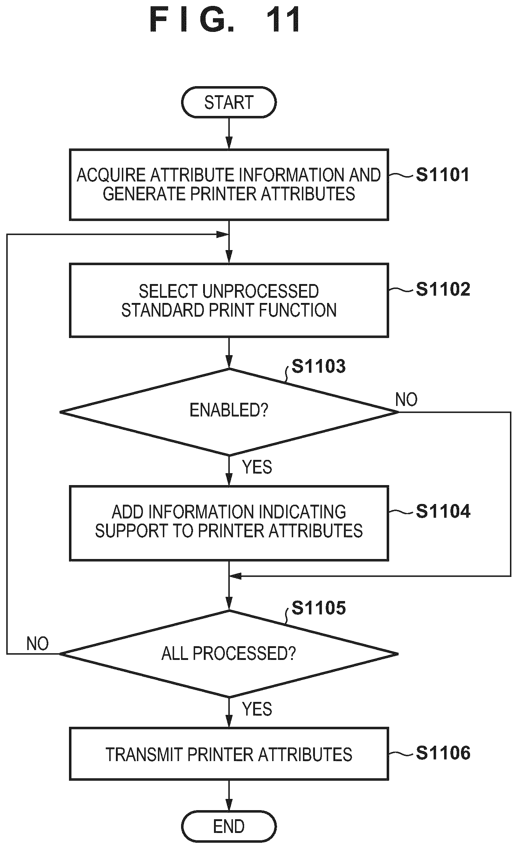

With reference to Fig. 11, an example of processing of transmitting the printer attributes by the printing apparatus 500 will be described. The transmission destination of the printer attributes may be the print server 130 or the information processing apparatus 110. If the transmission destination of the printer attributes is the print server 130, the operation shown in Fig. 11 is started in S909 of Fig. 9 or at any of the above-described timings. If the transmission destination of the printer attributes is the information processing apparatus 110, the operation shown in Fig. 11 is started in, for example, S913 of Fig. 9.

In step S1101, the CP control unit 607 of the printing apparatus 500 acquires the attribute information of the printing apparatus 500. The attribute information may be acquired from the printer engine 520 via the printer I/F 505.

In step S1102, the CP control unit 607 of the printing apparatus 500 selects, from one or more types of standard print functions supported by the printing apparatus 500, one standard print function which is not already selected as the target of succeeding processing in steps S1103 and S1104. If the printing apparatus 500 does not support any standard print function, processing in steps S1103 and S1104 is skipped.

In step S1103, the CP control unit 607 of the printing apparatus 500 determines whether the selected standard print function is enabled. If it is determined that the selected standard print function is enabled ("YES" in step S1103), the printing apparatus 500 advances the process to step S1104; otherwise ("NO" in step S1103), advances the process to step S1105. Whether the standard print function is enabled is, for example, set by the user on the network setting screen 800 and stored as the printer information 621 in the storage apparatus 504.

In step S1104, the CP control unit 607 of the printing apparatus 500 adds, to the printer attributes generated in step S1101, information indicating that the printing apparatus 500 supports the selected standard print function. For example, if the selected standard print function is AirPrint, the record 1016 shown in Fig. 10 is added. If the selected standard print function is Mopria, the record 1015 shown in Fig. 10 is added.

In step S1105, the CP control unit 607 of the printing apparatus 500 determines whether all of one or more types of standard print functions supported by the printing apparatus 500 are selected. If it is determined that all of standard print functions are selected ("YES" in step S1105), the printing apparatus 500 advances the process to step S1106; otherwise ("NO" in step S1105), returns the process to step S1102. In this manner, for each of one or more types of standard print functions supported by the printing apparatus 500, processing in steps S1103 and S1104 is executed.

In step S1106, the CP control unit 607 of the printing apparatus 500 transmits the generated printer attributes to the destination apparatus. The printer attributes generated in the method described above indicates that one or more types of standard print functions that are supported by the printing apparatus 500 and enabled. If the printer attributes include information regarding a specific standard print function, the apparatus (for example, the print server 130 or the information processing apparatus 110) that has received the printer attributes from the printing apparatus 500 recognizes that the printing apparatus 500 supports the specific standard print function. On the other hand, if the specific standard print function supported by the printing apparatus 500 is disabled, or if the printing apparatus 500 does not support the specific standard print function, information regarding the specific standard print function is not included in the printer attributes. Therefore, the apparatus that has received such the printer attributes from the printing apparatus 500 recognizes that the printing apparatus 500 does not support the specific standard print function.

The printer attributes transmitted in the method shown in Fig. 11 indicates that the printing apparatus 500 does not support standard print functions by not including the records (for example, the records 1015 and 1016) corresponding to the standard print functions. Instead, the printer attributes may indicate that the printing apparatus 500 does not support a standard print function by including the record corresponding to the standard print function that has a specific value. For example, the printer attributes may indicate that the printing apparatus 500 does not support Mopria by including the record having the name of "mopria-certified" and a value of "unsupported". Further, the printer attributes may indicate that the printing apparatus 500 does not support AirPrint by including the record having the name of "ipp-features-supported" and a value of "airprint-unsupported".

According to the method shown in Fig. 11, when transmitting the printer attributes to the print server 130 in response to setting to transmit the standard print support information to the print server 130, the printing apparatus 500 may execute steps S1103 and S1104 only for a specific standard print function. For example, if AirPrint is set to be enabled in the setting area 801 of the network setting screen 800, the printing apparatus 500 may execute steps S1103 and S1104 for AirPrint but not execute steps S1103 and S1104 for Mopria.

### [Overall Processing Sequence of Local Print]

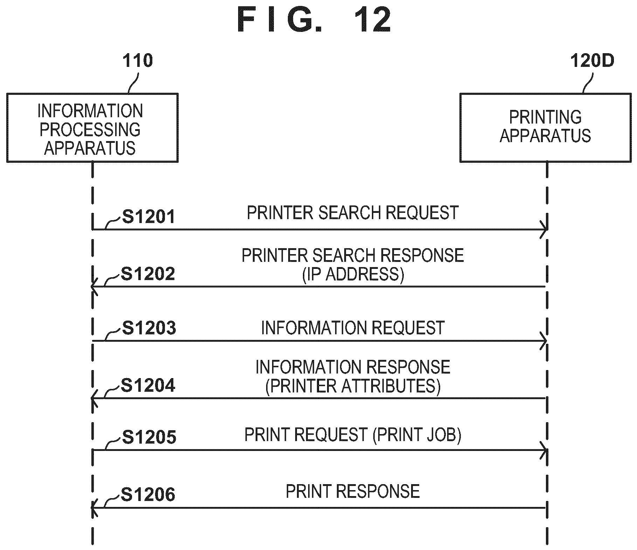

With reference to Fig. 12, the overall processing sequence for performing local print will be described. In the example shown in Fig. 12, the information processing apparatus 110 submits a print job to the printing apparatus 120D connected to the same network (that is, the LAN 101) as the information processing apparatus 110. Communication between the information processing apparatus 110 and the printing apparatus 120D may be performed using IPP. Communication between the information processing apparatus 110 and the printing apparatus 120D is performed in the LAN 101 without intervening the wide area network 103. In the example described below, a case will be described in which the information processing apparatus 110 has AirPrint as the standard print function, and performs local print using AirPrint. A similar description may be applied to a case in which the information processing apparatus 110 has Mopria or another standard print function. The printing apparatus 120D supports Airprint.

In S1201, in accordance with an instruction from the user of the information processing apparatus 110, the printer management unit 405 of the information processing apparatus 110 transmits, using Airprint, a printer search request to the network (that is, the LAN 101) connected with the information processing apparatus 110. The printer request search may be performed by broadcasting to the LAN 101. The printer search request may be a request for a response as to whether a printer supporting AirPrint exists.

In S1202, in response to the printer search request, the LP control unit 608 of the printing apparatus 120D supporting Airprint transmits a printer search response to the information processing apparatus 110. The printer search response may include the Internet protocol (IP) address of the printing apparatus 120D. A printing apparatus not supporting Airprint or a printing apparatus with Airprint disabled may not respond to the printer request search. The printer management unit 405 of the information processing apparatus 110 stores, as a part of the printer information 411 in the storage control unit 410, the IP address of the printing apparatus 120D transmitting the printer search response. In addition, the information output unit 402 of the information processing apparatus 110 may present a list of found printing apparatuses to the user.

In S1203, the printer management unit 405 of the information processing apparatus 110 transmits an information request to the printing apparatus 120D. The information request may be a request for information regarding the printing apparatus 120D. The information request may be transmitted in a Get-Printer-Attributes Request message defined in IPP.

In S1204, in response to reception of the information request from the information processing apparatus 110, the printer management unit 606 of the printing apparatus 120D transmits an information response to the information processing apparatus 110. The information response includes the printer attributes of the printing apparatus 120D. The printer management unit 405 of the information processing apparatus 110 updates the printer information 411 based on the information response. The information response may be transmitted in a Get-Printer-Attributes Response message defined in IPP.

In S1205, in accordance with an instruction from the user of the information processing apparatus 110, the print control unit 404 of the information processing apparatus 110 transmits a print request to the printing apparatus 120D. The print request includes a print job. The print job may include print data and print setting. The print request may be a request to the printing apparatus 120D for printing the print data included in the print request.

In S1206, the LP control unit 608 of the printing apparatus 120D executes printing in accordance with the received print job. The LP control unit 608 of the printing apparatus 120D transmits the result of printing to the information processing apparatus 110 as a print response.

### [Operation Procedure of Executing Printer Search by Information Processing Apparatus]

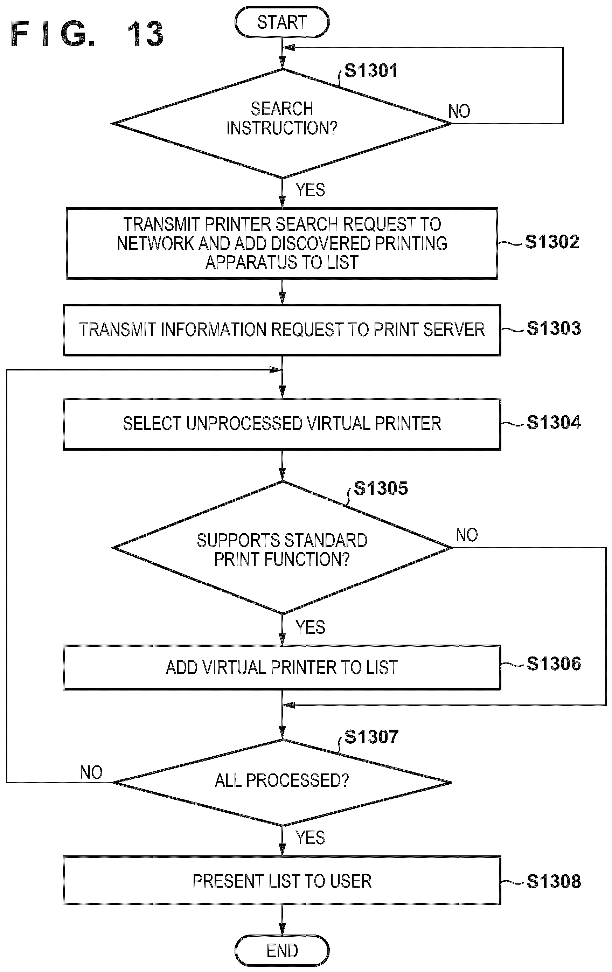

With reference to Fig. 13, an example of processing of searching for a printer supporting the standard print function of the information processing apparatus 110 by the information processing apparatus 110 will be described. The operation shown in Fig. 13 may be continuously executed during the operation of the information processing apparatus 110.

In step S1301, the printer management unit 405 of the information processing apparatus 110 determines whether a printer search instruction is acquired from the user of the information processing apparatus 110. If it is determined that a printer search instruction is acquired ("YES" in step S1301), the information processing apparatus 110 advances the process to step S1302; otherwise ("NO" in step S1301), repeats step S1301.

In step S1302, as in S1201 described above, the printer management unit 405 of the information processing apparatus 110 transmits, using the standard print function of the information processing apparatus 110, a printer search request to the network (that is, the LAN 101) connected with the information processing apparatus 110. The printer management unit 405 of the information processing apparatus 110 adds, to a printer list, printing apparatuses that responded to the printer search request. The printer list lists printers supporting the standard print function of the information processing apparatus 110. Any printing apparatus that responds to the printer search request using the standard print function supports the standard print function.

In step S1303, as in S912 described above, the printer management unit 405 of the information processing apparatus 110 transmits an information request to the print server 130. The information request may be a request for information regarding the logical printer usable by the user of the information processing apparatus 110. As in S913 described above, the print server 130 presents, to the information processing apparatus 110, an information response including information of one or more virtual printers usable by the information processing apparatus 110. The one or more virtual printers can include a virtual printer associated with a printing apparatus supporting the standard print function of the information processing apparatus 110.

In step S1304, the printer management unit 405 of the information processing apparatus 110 selects, from one or more virtual printers included in the information response from the print server 130, one virtual printer which is not already selected as the target of succeeding processing in steps S1305 and S1306. If the information response includes no virtual printer, processing in steps S1305 and S1306 is skipped.

In step S1305, the printer management unit 405 of the information processing apparatus 110 determines whether the selected virtual printer supports the standard print function of the information processing apparatus 110. If it is determined that the selected virtual printer supports the standard print function of the information processing apparatus 110 ("YES" in step S1305), the printing apparatus 500 advances the process to step S1306; otherwise ("NO" in step S1305), advances the process to step S1307. Whether the selected virtual printer supports the standard print function of the information processing apparatus 110 may be determined based on the printer attributes included in the information response. For example, if the printer attributes includes the record 1016 shown in Fig. 10, the virtual printer supports Airprint. If the printer attributes includes the record 1015 shown in Fig. 10, the virtual printer supports Mopria.

In step S1306, the printer management unit 405 of the information processing apparatus 110 adds the selected virtual printer to the printer list. In step S1307, the printer management unit 405 of the information processing apparatus 110 determines whether all of one or more virtual printers included in the information response have been selected. If it is determined that all of the virtual printers have been selected ("YES" in step S1307), the printing apparatus 500 advances the process to step S1308; otherwise ("NO" in step S1307), returns the process to step S1304. In this manner, processing in steps S1305 and S1306 is executed for each of one or more virtual printers included in the information response.

In step S1308, the information output unit 402 of the information processing apparatus 110 presents the printer list as a result of inquiry to the user. The printer list includes both the printing apparatus connected to the same network as the information processing apparatus 110 and supporting the standard print function of the information processing apparatus 110, and the virtual printer supporting the standard print function of the information processing apparatus 110. In this manner, with a single operation (the search instruction in step S1301), the user can search for various printers to which the information processing apparatus 110 can submit a print job.

In the example shown in Fig. 13, steps S1303 to S1307 are executed after step S1302. Instead, steps S1303 to S1307 may be executed before step S1302, or steps S1303 to S1307 may be executed in parallel with step S1302.

### [Print List Presented to User]

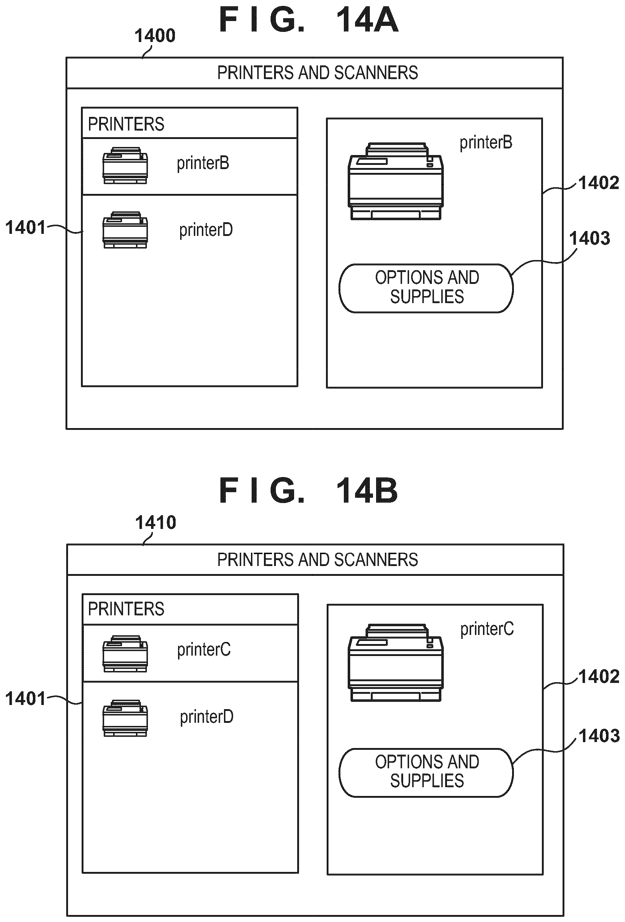

With reference to Figs. 14A and 14B, an example of the printer list presented to the user in step S1308 of Fig. 13 will be described. In the following description, the following assumptions are made. The printing apparatuses 120A to 120C are registered with the print server 130. Accordingly, the virtual printers corresponding to the printing apparatuses 120A to 120C are presented to the information processing apparatus 110 by the print server 130. The printing apparatus 120A does not support either AirPrint or Mopria. The printing apparatus 120B supports AirPrint but does not support Mopria. The printing apparatus 120C supports Mopria but does not support AirPrint. The printing apparatus 120D supports both AirPrint and Mopria.

Fig. 14A shows a result screen 1400 concerning a printer search executed by the information processing apparatus 110 having AirPrint but not Mopria. The result screen 1400 includes a list display area 1401. Printers found by the printer search are listed in the list display area 1401.

In the example shown in Fig. 14A, the list display area 1401 includes "printerB" indicating the virtual printer corresponding to the printing apparatus 120B. The printing apparatus 120B supports AirPrint. Accordingly, in step S1306 of Fig. 13, the virtual printer corresponding to the printing apparatus 120B is included in the printer list.

In the example shown in Fig. 14A, the list display area 1401 also includes "printerD" indicating the printing apparatus 120D. The printing apparatus 120D supports AirPrint. Accordingly, in step S1302 of Fig. 13, the printing apparatus 120D is included in the printer list.

The result screen 1400 includes a detail display area 1402 that shows the printer selected by the user. In the example shown in Fig. 14A, the detail of "PrinterB" is displayed. The result screen 1400 also includes a button 1403 for a transition to a screen for checking information on options and supplies of the printer selected by the user.

The user of the information processing apparatus 110 can execute printing using the printer selected from the list display area 1401. For example, if the user selects "PrinterB", printing is executed via the print server 130 by processing from S914 to S917 of Fig. 9. The printing may be executed by the CP function. If the user selects "PrinterD", printing is executed without intervening the print server 130 by processing from S1205 to S1206 of Fig. 12. The printing may be executed by Airprint.

Fig. 14B shows a result screen 1410 concerning a print search executed by the information processing apparatus 110 having Mopria but not Airprint. In the example shown in Fig. 14B, "printerB" indicating the virtual printer corresponding to the printing apparatus 120B is not included in the list display area 1401. Instead, "printerC" indicating the virtual printer corresponding to the printing apparatus 120C is included in the list display area 1401.

### <Second Embodiment>

The second embodiment will be described below. In the following description, a description of matters that may be similar to those in the first embodiment will be omitted. In the first embodiment, if the standard print function is enabled, the printing apparatus 500 transmits the standard print support information to both the print server 130 and the information processing apparatus 110. If the standard print function is disabled, the printing apparatus 500 does not transmit the standard print support information to either the print server 130 or the information processing apparatus 110. In this manner, whether to transmit the standard print support information is set uniformly for the print server 130 and the information processing apparatus 110.

In the second embodiment, whether to transmit the standard print support information can be set individually for a print server 130 and an information processing apparatus 110. Therefore, whether to transmit the standard print support information to the information processing apparatus 110 is set independently of whether to transmit the standard print support information to the print server 130.

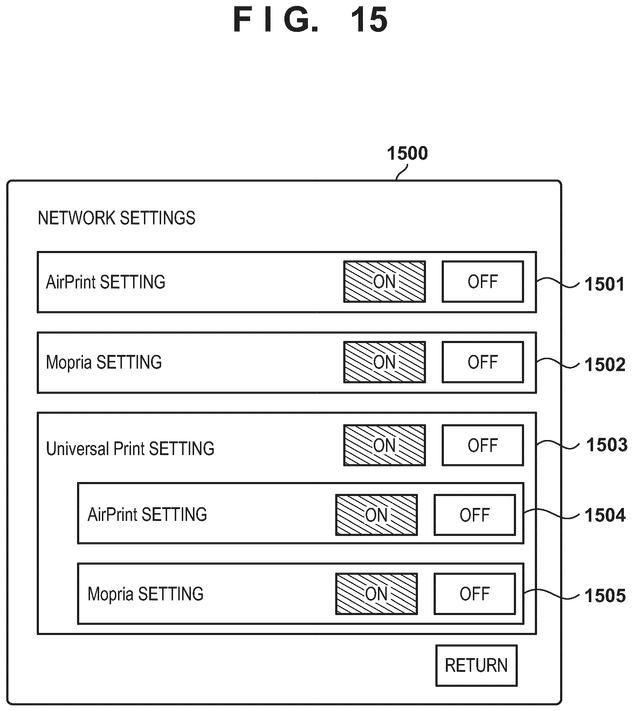

Fig. 15 is a view for explaining an example of the arrangement of a network setting screen 1500 displayed on an operation unit 540 of a printing apparatus 500. The network setting screen 1500 is displayed on, for example, a display panel 701 of the operation unit 540. Th network setting screen 1500 is a user interface that allows the user to set whether to enable or disable a specific print function. In the description of Fig. 15, it is assumed that the printing apparatus 500 supports each of AirPrint, Mopria, and CPS.

A setting area 1501 is an area for AirPrint setting for the information processing apparatus 110. If an ON button in the setting area 1501 is selected, a printer management unit 606 enables AirPrint for the information processing apparatus 110. If an OFF button in the setting area 1501 is selected, the printer management unit 606 disables AirPrint for the information processing apparatus 110. The ON button and the OFF button in the setting area 1501 can be alternately selected. The printer management unit 606 of the printing apparatus 500 stores the setting as to whether AirPrint for the information processing apparatus 110 is enabled or disabled in a storage apparatus 504 as printer information 621.

If AirPrint for the information processing apparatus 110 is enabled, the printing apparatus 500 operates as a printing apparatus supporting AirPrint with respect to the information processing apparatus 110. For example, the printing apparatus 500 operates in accordance with an instruction made by the information processing apparatus 110 using AirPrint. The printing apparatus 500 transmits, to the information processing apparatus 110, information indicating that the printing apparatus 500 supports AirPrint. This information may be referred to as support information.

If AirPrint for the information processing apparatus 110 is disabled, the printing apparatus 500 does not operate as a printing apparatus supporting AirPrint with respect to the information processing apparatus 110. For example, the printing apparatus 500 does not operate in accordance with an instruction made by the information processing apparatus 110 using AirPrint. The printing apparatus 500 does not transmit, to the information processing apparatus 110, information indicating that the printing apparatus 500 supports AirPrint.

A setting area 1502 is an area for Mopria setting for the information processing apparatus 110. Since Mopria setting may be similar to AirPrint setting, a repetitive description will be omitted. A setting area 1503 is an area for Universal Print setting. Since Universal Print setting may be similar to AirPrint setting, a repetitive description will be omitted.

A setting area 1504 is an area for AirPrint setting for the print server 130. If an ON button in the setting area 1504 is selected, the printer management unit 606 enables AirPrint for the print server 130. If an OFF button in the setting area 1504 is selected, the printer management unit 606 disables AirPrint for the print server 130. The ON button and the OFF button in the setting area 1504 can be alternately selected. The printer management unit 606 of the printing apparatus 500 stores the setting as to whether AirPrint for the print server 130 is enabled or disabled in the storage apparatus 504 as the printer information 621.

If AirPrint for the print server 130 is enabled, the printing apparatus 500 operates as a printing apparatus supporting AirPrint with respect to the print server 130. For example, the printing apparatus 500 operates in accordance with an instruction made by the print server 130 using AirPrint. The printing apparatus 500 transmits, to the print server 130, information indicating that the printing apparatus 500 supports AirPrint.

If AirPrint for the print server 130 is disabled, the printing apparatus 500 does not operate as a printing apparatus supporting AirPrint with respect to the print server 130. For example, the printing apparatus 500 does not operate in accordance with an instruction made by the print server 130 using AirPrint. The printing apparatus 500 does not transmit, to the print server 130, information indicating that the printing apparatus 500 supports AirPrint.

A setting area 1505 is an area for Mopria setting for the print server 130. Since Mopria setting may be similar to AirPrint setting, a repetitive description will be omitted. The setting area 1503 is an area for Universal Print setting.

For example, assume that in the printing apparatus 500, AirPrint for the print server 130 is set to be enabled and AirPrint for the information processing apparatus 110 is set to be disabled. In this case, the printing apparatus 500 transmits the standard print support information to the print server 130 but does not transmit the standard print support information to the information processing apparatus 110. As a result, the information processing apparatus 110 can find the printing apparatus 500 only via the print server 130. On the other hand, assume that in the printing apparatus 500, AirPrint for the print server 130 is set to be disabled and AirPrint for the information processing apparatus 110 is set to be enabled. In this case, the printing apparatus 500 does not transmit the standard print support information to the print server 130 but transmits the standard print support information to the information processing apparatus 110. As a result, the information processing apparatus 110 can find only the printing apparatus 500 connected to the same network.

### <Third Embodiment>

The third embodiment will be described below. In the following description, a description of matters that may be similar to those in the first embodiment will be omitted. In the first embodiment, if the standard print function is enabled, the printing apparatus 500 transmits the standard print support information to both the print server 130 and the information processing apparatus 110. If the standard print function is disabled, the printing apparatus 500 does not transmit the standard print support information to either the print server 130 or the information processing apparatus 110. In this manner, whether to transmit the standard print support information is set uniformly for the print server 130 and the information processing apparatus 110.

In the third embodiment, processing of whether to transmit the standard print support information differs between a case of transmitting the printer attributes to a print server 130 and a case of transmitting the printer attributes to an information processing apparatus 110. In the third embodiment, as in the first embodiment, a printing apparatus 500 may determine whether to transmit the standard print support information to the information processing apparatus 110 based on whether the standard print function is enabled or disabled in the printing apparatus 500.

On the other hand, in the third embodiment, the printing apparatus 500 transmits the standard print support information to the print server 130 regardless of whether the standard print function is enabled or disabled in the printing apparatus 500. Accordingly, the user of the information processing apparatus 110 can start execution of standard print via the print server 130. However, if a specific standard print function is disabled in the printing apparatus 500, a specific document format supported by the specific standard print function is not actually supported. Therefore, if a print job is transmitted in the specific document format, the printing apparatus 500 fails printing.

### [Operation Procedure of Transmitting Printer Attributes by Printing Apparatus]

In the third embodiment, processing of transmitting the printer attributes to the information processing apparatus 110 by the printing apparatus 500 may be similar to the processing described above with reference to Fig. 11. On the other hand, in the third embodiment, processing of transmitting the printer attributes to the print server 130 by the printing apparatus 500 is different from the processing described above with reference to Fig. 11 in that step S1103 is not executed. That is, the printing apparatus 500 executes step S1104 next to execution of step S1102 of Fig. 11.

The printer attributes transmitted to the print server 130 in step S1106 indicates one or more types of standard print functions supported by the printing apparatus 500. The standard print functions indicated by the printer attributes include the function enabled in the printing apparatus 500 and the function disabled in the printing apparatus 500. If the printer attributes includes information regarding a specific standard print function, an apparatus (print server 130) that has received the printer attributes from the printing apparatus 500 recognizes that the printing apparatus 500 supports the specific standard print function. However, the standard print function may be actually disabled in the printing apparatus 500. Therefore, the user can instruct printing by using the specific standard print function, but if a print job is transmitted in a specific document format supported by the specific standard print function, the printing apparatus 500 does not execute printing.

### <Fourth Embodiment>

The fourth embodiment will be described below. In the following description, a description of matters that may be similar to those in the third embodiment will be omitted. In the third embodiment, the printing apparatus 500 transmits the standard print support information to the print server 130 regardless of whether the standard print function is enabled or disabled in the printing apparatus 500. Accordingly, the user of the information processing apparatus 110 can start execution of standard print via the print server 130.

In the fourth embodiment, in addition to the standard print support information described above, a printing apparatus 500 transmits information indicating whether a specific standard print function is enabled or disabled to a print server 130. In the following description, information indicating whether a specific standard print function is enabled or disabled is referred to as standard print availability information. In the fourth embodiment, the standard print support information indicates whether the printing apparatus 500 supports a specific standard print function (that is, the printing apparatus 500 has a specific standard print function). The standard print availability information indicates whether a specific standard print function is enabled or disabled in the printing apparatus 500.

If the standard print availability information indicates that a specific standard print function is enabled, the user of an information processing apparatus 110 can execute printing using the specific standard print function via the print server 130. On the other hand, if the standard print availability information indicates that a specific standard print function is disabled, the user of the information processing apparatus 110 cannot execute printing using the specific standard print function via the print server 130.

The print server 130 transmits, to the information processing apparatus 110 as the printer attributes, the standard print availability information received from the printing apparatus 500. If the printer attributes acquired in a printer search indicates that the standard print function is disabled, the information processing apparatus 110 does not present the printer as a printer list to the user. Thus, it is suppressed that a print job is transmitted using the standard print function from the information processing apparatus 110 if the standard print function is disabled.

### [Printer Attributes]

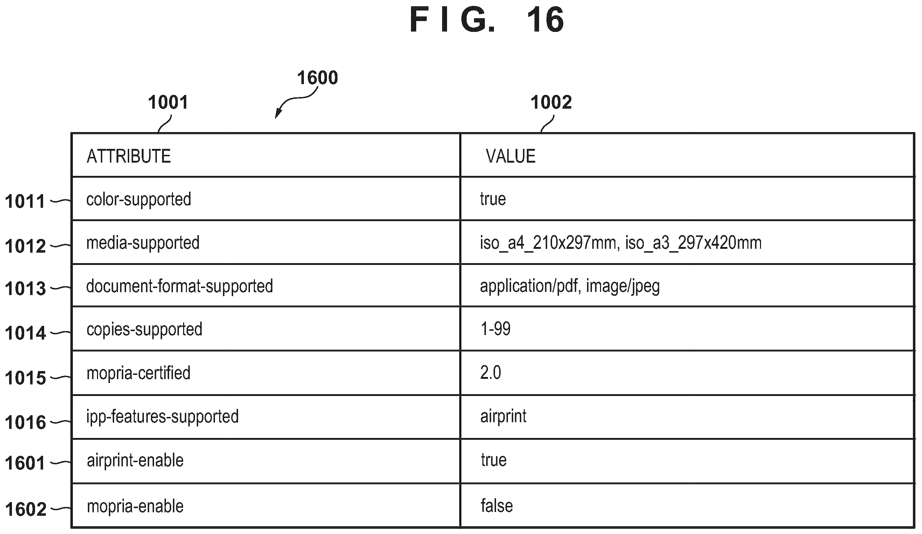

With reference to Fig. 16, an example of printer attributes 1600 transmitted by the printing apparatus 500 in S909 and S913 of Fig. 9 in the fourth embodiment will be described. The printer attributes 1600 is different from the printer attributes 1000 in that records 1601 and 1062 are further included, and the remaining records may be the same as those in the printer attributes 1000.

The record 1601 indicates whether the AirPrint function is enabled or disabled in the printing apparatus 500. The attribute name is "airprint-enable". The attribute value is "true" if the AirPrint function is enabled in the printing apparatus 500. The attribute value is "false" if the AirPrint function is disabled. If the printer attributes 1600 includes the record having the name of "airprint-enable" and the value of "true", the printer attributes 1600 indicates that the AirPrint function is enabled in the printing apparatus 500. To the contrary, if the printer attributes 1600 includes the record having the name of "airprint-enable" and the value of "false", or if the printer attributes 1600 does not include the record "airprint-enable" itself, the printer attributes 1600 indicates that the AirPrint function is disabled in the printing apparatus 500.

The record 1602 indicates whether the Mopria function is enabled or disabled in the printing apparatus 500. The attribute name is "mopria-enable". The attribute value is "true" if the Mopria function is enabled in the printing apparatus 500. The attribute value is "false" if the Mopria function is disabled. If the printer attributes 1600 includes the record having the name of "mopria-enable" and the value of "true", the printer attributes 1600 indicates that the Mopria function is enabled in the printing apparatus 500. To the contrary, if the printer attributes 1600 includes the record having the name of "mopria-enable" and the value of "false", or if the printer attributes 1600 does not include the record "mopria-enable" itself, the printer attributes 1600 indicates that the Mopria function is disabled in the printing apparatus 500.

### [Operation Procedure of Executing Printer Search by Information Processing Apparatus]

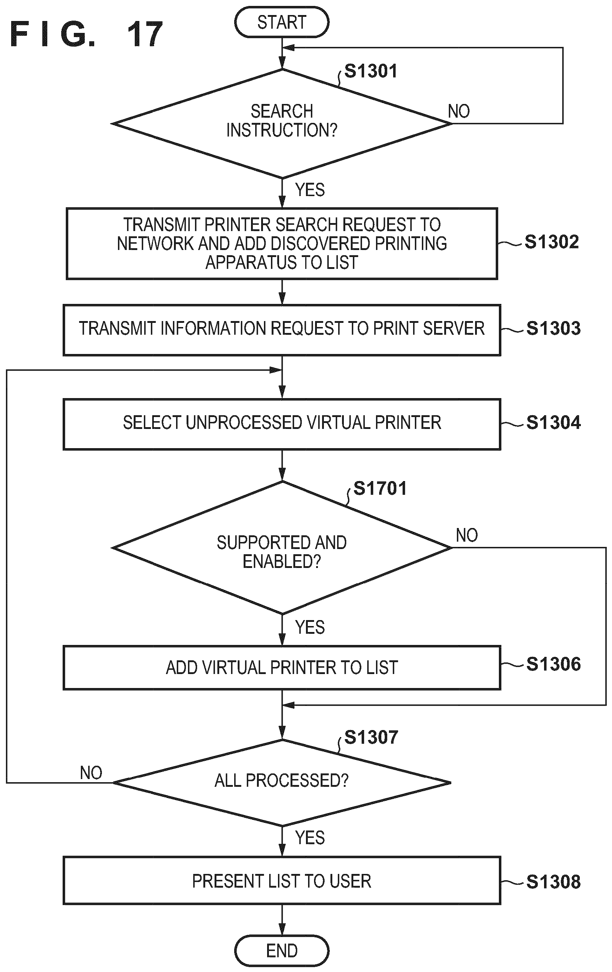

With reference to Fig. 17, an example of processing of searching for a printer supporting the standard print function of the information processing apparatus 110 by the information processing apparatus 110 will be described. The method shown in Fig. 17 is different from the method shown in Fig. 13 in that step S1701 is executed instead of step S1305, and the remaining steps may be the same as those of the method shown in Fig. 13.

In step S1701, a printer management unit 405 of the information processing apparatus 110 determines whether the selected virtual printer supports the standard print function of the information processing apparatus 110 and the standard print function is enabled. If it is determined that the selected virtual printer supports the standard print function of the information processing apparatus 110 and the standard print function is enabled ("YES" in step S1701), the printing apparatus 500 advances the process to step S1809; otherwise ("NO" in step S1701), advances the process to step S1807.

Whether the selected virtual printer supports the standard print function of the information processing apparatus 110 may be determined based on the printer attributes included in the information response. For example, if the printer attributes include a record 1016 shown in Fig. 16, the virtual printer supports Airprint. If the printer attributes include a record 1015 shown in Fig. 16, the virtual printer supports Mopria.

Whether the standard print function of the information processing apparatus 110 is enabled in the selected virtual printer may be determined based on the printer attributes included in the information response. For example, if the printer attributes include the record 1601 shown in Fig. 16 with the value set to "true", the Airprint function is enabled in the virtual printer. If the printer attributes include the record 1602 shown in Fig. 16 with the value set to "true", the Mopria function is enabled in the virtual printer.

### <Fifth Embodiment>

The fifth embodiment will be described below. In the following description, a description of matters that may be similar to those in the fourth embodiment will be omitted. In the fourth embodiment, the printing apparatus 500 transmits the standard print availability information to the print server 130, and the print server 130 transmits the standard print availability information to the information processing apparatus 110. Thus, the information processing apparatus 110 can determine whether a specific standard print function is enabled or disabled in the printing apparatus 500. In the fifth embodiment, a print server 130 determines whether a specific standard print function is enabled or disabled in a printing apparatus 500. The print server 130 performs processing in accordance with a result of the determination.

If standard print availability information is received from the printing apparatus 500, a printer management unit 303 of the print server 130 updates printer information 311 regarding the printing apparatus 500 so as to include the standard print availability information. The print server 130 may not transmit the standard print availability information to an information processing apparatus 110. Instead, the print server 130 may transmit the standard print availability information to the information processing apparatus 110. Even if the information processing apparatus 110 does not execute determination based on the standard print availability information and transmits a print job to the print server 130 by using a specific standard print function, the print server 130 does not transmit the print job to the printing apparatus 500 in which the specific standard print function is disabled.

### [Operation Procedure of Processing Print Job by Print Server]

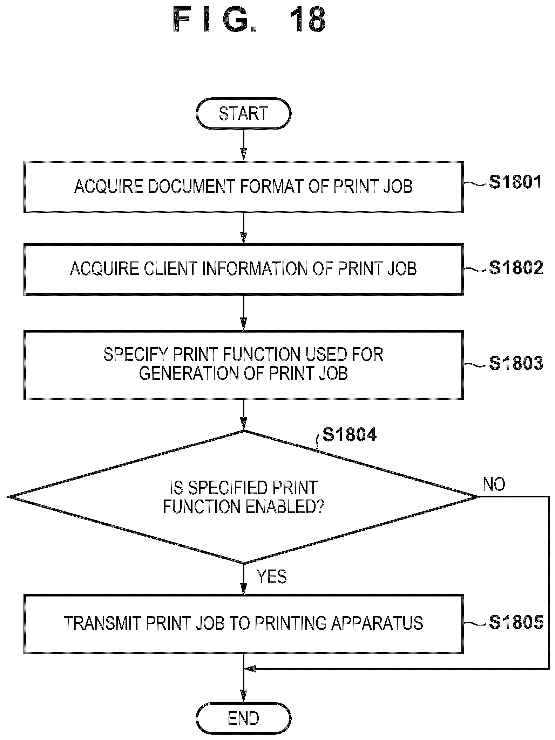

With reference to Fig. 18, an example of an operation of processing a print job received from the information processing apparatus 110 by the print server 130 will be described. The operation shown in Fig. 18 is started, for example, when the print server 130 receives a print request from the information processing apparatus 110 in S914 of Fig. 9. As described above, a print request includes a print job.

In step S1801, a job management unit 304 of the print server 130 acquires the document format of the received print job from job information 312. The document format is stored in document-format which is a job attribute of IPP.

In step S1802, the job management unit 304 of the print server 130 acquires, from the job information 312, client information regarding the information processing apparatus 110 that has transmitted the received print job. Client information may include, for example, the OS type of the information processing apparatus 110. Client information is stored in client-info which an operation attribute of IPP.

In step S1803, based on the document format acquired in step S1801 and the client information acquired in step S1802, the job management unit 304 of the print server 130 specifies the print function used to generate the print job.

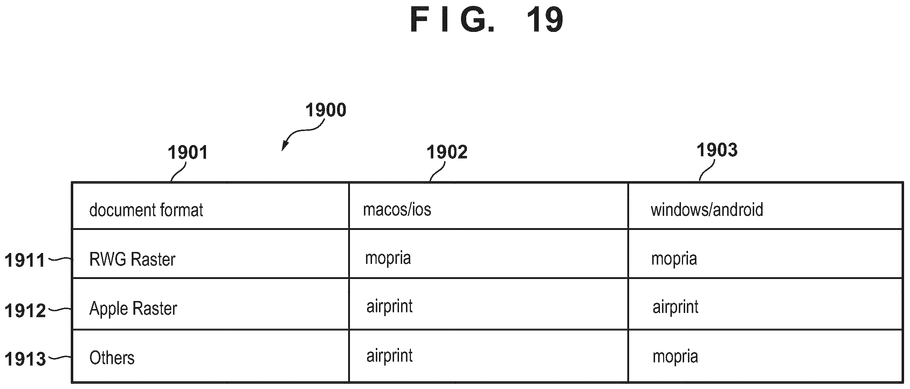

With reference to Fig. 19, an example of a method for specifying the print function used to generate the print job will be described. The print server 130 may specify the print function by referring to function specifying information 1900. The function specifying information 1900 is generated by, for example, the administrator of the print server 130 in advance (for example, before execution of the method shown in Fig. 19), and stored in a storage apparatus 204 of the print server 130. In the example shown in Fig. 19, the function specifying information 1900 is represented in a table format. Instead, the function specifying information 1900 may be represented in another format.

The function specifying information 1900 includes columns 1901 to 1903. The column 1901 indicates the document format. The column 1902 indicates the print function for a case where the OS type is macOS or iOS. The column 1903 indicates the print function for a case where the OS type is Windows or Android.

A record 1911 indicates the print function for each OS for a case where the document format is PWG Raster. A record 1912 indicates the print function for each OS for a case where the document format is Apple Raster. A record 1912 indicates the print function for each OS for a case where the document format is neither PWG Raster nor Apple Raster (for example, for a case of PDF).

If the document format is PWG Raster, the print server 130 specifies that the print function is Mopria, regardless of the OS type. If the document format is Apple Raster, the print server 130 specifies that the print function is AirPrint, regardless of the OS type. If the document format is other than these, the print server 130 specifies that the print function is AirPrint if the OS type is MacOS or iOS, and specifies that the print function is Mopria if the OS type is Windows or Android.

Returning the description to Fig. 18, in step S1804, based on printer information 311, the job management unit 304 of the print server 130 determines whether the print function specified in step S1803 is enabled in the printing apparatus 500. If it is determined that the specified print function is enabled in the printing apparatus 500 ("YES" in step S1804), the print server 130 advances the process to step S1805; otherwise ("NO" in step S1804), terminates the process. If it is determined that the specified print function is not enabled (that is, disabled) in the printing apparatus 500, the print server 130 may respond with an error to the information processing apparatus 110.

In step S1805, the job management unit 304 of the print server 130 transmits the print job received from the information processing apparatus 110 to the printing apparatus 500. This step may be executed in S917 of Fig. 9 described above. In this manner, the print server 130 determines, based on the standard print availability information, whether to transmit the print job received from the information processing apparatus 110 to the printing apparatus 500.

### <Sixth Embodiment>

The sixth embodiment will be described below. In the following description, a description of matters that may be similar to those in the third embodiment will be omitted. In the sixth embodiment, it is assumed that a printing apparatus 500 supports AirPrint, and the OS type of an information processing apparatus 110 is macOS. Regardless of whether the standard print function is enabled or disabled in the printing apparatus 500, the printing apparatus 500 transmits, to a print server 130, standard print support information indicating that it supports AirPrint. Accordingly, the user of the information processing apparatus 110 can start execution of AirPrint via the print server 130.

The print server 130 receives a print job generated by AirPrint from the information processing apparatus 110, and transmits the print job to the printing apparatus 500. Regardless of whether AirPrint is enabled or disabled, if a print job generated by AirPrint is received from the print server 130, the printing apparatus 500 may execute printing in accordance with the print job. On the other hand, if a print job generated by AirPrint is received directly from the information processing apparatus 110 (that is, without intervening the print server 130), the printing apparatus 500 may not execute printing if AirPrint is disabled.

### (Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2022-163586 filed October 11, 2022, and Japanese Patent Application No. 2023-134157 filed August 21, 2023, which are hereby incorporated by reference herein.

## Claims

1. A printing apparatus comprising:
remote printing means for executing printing in accordance with a print job transmitted from a print server;
local printing means for executing printing in accordance with a print job transmitted from an information processing apparatus connected to a same network as the printing apparatus; and
transmission means for transmitting, to the print server, support information indicating that the printing apparatus supports a standard print function included as standard in an operating system of the information processing apparatus.

2. The printing apparatus according to claim 1, further comprising setting means for setting whether to transmit the support information to the print server,
wherein the transmission means
transmits the support information to the print server in a case where it is set to transmit the support information to the print server, and
does not transmit the support information to the print server in a case where it is not set to transmit the support information to the print server.

3. The printing apparatus according to claim 2, wherein the setting means can set whether to transmit the support information to the print server individually for each of two or more types of standard print functions.

4. The printing apparatus according to claim 2 or 3, wherein
the setting means further sets whether to transmit the support information to the information processing apparatus independently of whether to transmit the support information to the print server, and
the transmission means
transmits the support information to the information processing apparatus in a case where it is set to transmit the support information to the information processing apparatus, and
does not transmit the support information to the information processing apparatus in a case where it is not set to transmit the support information to the information processing apparatus.

5. The printing apparatus according to claim 1, wherein the transmission means transmits the support information to the print server regardless of whether the standard print function is enabled or disabled in the printing apparatus.

6. The printing apparatus according to claim 5, wherein the transmission means further transmits, to the print server, availability information indicating whether the standard print function is enabled or disabled in the printing apparatus.

7. The printing apparatus according to any one of claims 1 to 6, wherein
the transmission means transmits the support information to the print server in response to at least one of following events:
registration of the printing apparatus with the print server is completed;
the printing apparatus is activated in a state in which the printing apparatus is registered with the print server;
a function of performing printing in accordance with a print job transmitted from the print server is changed from a disabled state to an enabled state;
it is set to transmit the support information to the print server;
configuration information of the printing apparatus has changed; and
a state of the printing apparatus has changed.

8. The printing apparatus according to any one of claims 1 to 7, wherein the support information is included in a message defined by Internet Printing Protocol.

9. A print server comprising:
reception means for receiving, from a printing apparatus, support information indicating that the printing apparatus supports a standard print function included as standard in an operating system of an information processing apparatus; and
presentation means for presenting, to the information processing apparatus, a virtual printer associated with a printing apparatus supporting the standard print function in a case where the information processing apparatus executes a printer search by the standard print function.

10. The print server according to claim 9, wherein the reception means receives the support information for each of two or more types of standard print functions.

11. The print server according to claim 9 or 10, wherein the reception means further receives, from the printing apparatus, availability information indicating whether the standard print function is enabled or disabled in the printing apparatus.

12. The print server according to claim 11, wherein
the reception means further receives a print job from the information processing apparatus, and
the print server further comprises determination means for determining, based on the availability information, whether to transmit the print job to the printing apparatus.

13. The print server according to any one of claims 9 to 12, wherein the support information is included in a message defined by Internet Printing Protocol.

14. An information processing apparatus comprising:
storage means for storing an operating system including a standard print function as standard;
acquisition means for acquiring, from a user, an instruction to execute a printer search by the standard print function;
search means for inquiring, in accordance with the instruction, of a network that is connected with the information processing apparatus and a print server that provides a virtual printer as to whether a printer supporting the standard print function exists; and
presentation means for presenting, to the user, a result of inquiry by the search means.

15. A control method of a printing apparatus,
the printing apparatus comprising:
remote printing means for executing printing in accordance with a print job transmitted from a print server; and
local printing means for executing printing in accordance with a print job transmitted from an information processing apparatus connected to a same network as the printing apparatus, and
the control method comprising
a transmission step of transmitting, by control means of the printing apparatus, to the print server, support information indicating that the printing apparatus supports a standard print function included as standard in an operating system of the information processing apparatus.

16. A control method of a print server, the control method comprising:
a reception step of receiving, by reception means of the print server, from a printing apparatus, support information indicating that the printing apparatus supports a standard print function included as standard in an operating system of an information processing apparatus; and
a presentation step of presenting, by presentation means of the print server, to the information processing apparatus, a virtual printer associated with a printing apparatus supporting the standard print function in a case where the information processing apparatus executes a printer search by the standard print function.

17. A control method of an information processing apparatus including an operating system including a standard print function as standard, the control method comprising:
an acquisition step of acquiring, by acquisition means of the information processing apparatus, from a user, an instruction to execute a printer search by the standard print function;
a search step of inquiring, by search means of the information processing apparatus, in accordance with the instruction, of each of a network connected with the information processing apparatus and a print server that provides a virtual printer as to whether a printer supporting the standard print function exists; and
a presentation step of presenting, by presentation means of the information processing apparatus, a result of inquiry by the search means to the user.
